# EUROPÄISCHE PATENTSCHRIFT

(11) **EP 0 627 385 B1**
(45) Veröffentlichungstag und Bekanntmachung des Hinweises auf die Patenterteilung: **06.11.1996**
(21) Anmeldenummer: 94107885.9
(22) Anmeldetag: 21.05.1994
(51) Int. Cl.: C01G 19/02

(54) **Verfahren zur Herstellung von feinstteiligem, elektrisch leitfähigem Zinn-IV-oxid**
Process for the preparation of finely divided electrically conductive stannic oxide
Procédé de préparation de oxyde d'étain-IV conducteur électrique purement divisé

(30) Priorität: 04.06.1993 DE 4318568
(43) Veröffentlichungstag der Anmeldung: 07.12.1994
(73) Patentinhaber: Th. Goldschmidt AG, D-45127 Essen (DE)
(72) Erfinder: Althoff, Ralf, D-45721 Haltern (DE); Klapdor, Astrid, D-45147 Essen (DE); Lehnert, Andreas, Dr., D-45138 Essen (DE); Vallerien, Sven-Uwe, D-45239 Essen (DE)

(56) Entgegenhaltungen:
- EP-A- 0 448 946
- EP-A- 0 483 598
- EP-A- 0 530 624

## Beschreibung

Die Erfindung betrifft ein Verfahren zur Herstellung von feinstteiligem, elektrisch leitfähigem Zinn-IV-oxid durch Ausfällen von Zinn-IV-Verbindungen aus ihren wäßrigen Lösungen in Gegenwart von Fluor enthaltenden Dotierungsmitteln und Calcinieren der fluordotierten ausgefällten Zinn-IV-Verbindungen. Die Erfindung betrifft ferner die Verwendung des nach dem erfindungsgemäßen Verfahren erhaltenen fluordotierten Zinn-IV-oxids als Pigment, Toner oder als Füllstoff zur Einarbeitung in Kunstoffe, Farben, Lacke, Papier oder Textilfasern.

Die Herstellung elektrisch leitfähiger Zinn-IV-oxid-Schichten auf Substraten, insbesondere auf Glas, ist seit langem bekannt. Diese werden meist durch pyrolytische Zersetzung von flüssigen Zubereitungen, die Basis-Zinnverbindungen und fluoridhaltige Dotierungsmittel enthalten, erzeugt. Die elektrische Leitfähigkeit wird dabei durch den Einbau von Fluoridionen anstelle der Sauerstoffionen erzeugt. Diese Dotierung erzeugt wenig unterhalb des Leitungsbandes Störstellen oder Donatorterme, aus denen mit nur geringem Energieaufwand Elektronen in das Leitungsband gebracht werden können.

Für die Ausrüstung von diversen festen und flüssigen technischen Produkten, wie z.B. Kunststoffen, Farben und Lacken, Papieren, Textilfasern und Tonern, mit elektrischer Leitfähigkeit bzw. antistatischen Eigenschaften, werden oft pulverförmige Halbleiter eingesetzt. Dabei ist eine möglichst helle Farbe und eine möglichst kleine Korngröße erstrebenswert.

In der EU-PS 0 235 968 ist eine transparente, wäßrige Lösung beschrieben, die eine Zinnverbindung enthält, welche durch die Umsetzung von Zinncarboxylat (insbesondere Zinnoxalat) mit Wasserstoffperoxid im Verhältnis 1 : 1,5 oder darüber in wäßrigem Medium erhalten wird. Dabei kann in dem Reaktionssystem ein Dotierungsmittel in einer Menge von 0,01 bis 0,35 Mol je Mol Zinncarboxylat enthalten sein. Das entstehende Produkt wird oberhalb von 400°C calciniert. Dieses Verfahren ist jedoch nicht in jeder Hinsicht zufriedenstellend. Das als Ausgangsprodukt vorzugsweise dienende Zinn-II-oxalat muß zunächst aus metallischem Zinn oder einer Zinn-II-Verbindung hergestellt werden. Da das Zinn-II-oxalat in Wasser schwerlöslich ist, läuft die Oxidation mit Wasserstoffperoxid in heterogener Phase ab.

Zur Beseitigung dieser Nachteile wird in der DE-PS 40 34 353 angegeben, die benötigte Zinn-IV-oxalat-Lösung durch Elektrolyse einer wäßrigen Oxalsäurelösung unter Verwendung von Anoden aus Zinn oder zinnhaltigen Legierungen herzustellen. Hierbei müssen jedoch im Verlaufe der anschließenden Fällung oxalathaltige Abwässer entsorgt werden. Bei der anschließenden technischen Trocknung des Zinn-IV-oxids mittels eines Sprühtrockners erhält man kugelförmige Partikel. Sowohl diese Teilchenmorphologie als auch die minimal erreichbare Teilchengröße von etwa 1 µm sind jedoch anwendungstechnisch oft unbefriedigend.

In der DE-OS 41 29 611 wird der Einsatz von Filterhilfsmitteln, insbesondere von Cellulosefasern, die bei der anschließenden Calcinierung rückstandsfrei verbrennbar sind, zur Verbesserung der Filtrierbarkeit bei der Abtrennung des Zinn-IV-oxids dargestellt.

In der EU-OS 0 441 427 wird als Ausgangsverbindung bei der Fällung eine ethanolische Zinn-IV-chlorid-Lösung in Gegenwart einer wäßrigen Fluoridlösung verwendet. Als Fällungsmittel wird eine wäßrige Ammoniaklösung verwendet. Dieses Verfahren weist jedoch als Nachteil große Mengen an entstehenden Ammoniumsalzen auf, die entsorgt werden müssen. Ferner ist die Verwendung von Zinn-IV-chlorid ebenfalls nicht erstrebenswert.

Die vorliegende Erfindung befaßt sich mit dem technischen Problem, bei der Herstellung von feinstteiligem, elektrisch leitfähigem Zinn-IV-oxid die vorgenannten Nachteile zu vermeiden.

Das erfindungsgemäße Verfahren ist dadurch gekennzeichnet, daß man
a) Zinn-II-chlorid in Wasser und/oder organischen aliphatischen Alkoholen oder Ketonen mit jeweils höchstens 6 Kohlenstoffatomen im Molekül löst oder verteilt und durch Einwirkung von Wasserstoffperoxid in ein Zinn-IV-säuresol überführt,
b) dem Zinn-IV-säuresol eine Fluor enthaltende Verbindung in solchen Mengen, daß das molare Verhältnis von Zinn : Fluor 1 : 0,2 bis 1 : 0,6 beträgt, und wäßrige Alkali- oder Ammoniumhydroxid- oder -carbonatlösung in zur Ausfällung des Zinn-IV-oxids bzw. des Zinn-IV-oxidhydrats ausreichender Menge nacheinander oder gemeinsam zusetzt,
c) das ausgefallene fluordotierte Zinn-IV-oxid bzw. -oxidhydrat gefriertrocknet und
d) das getrocknete Produkt innerhalb eines Temperaturbereiches von 300 bis 600°C während eines Zeitraumes von 8 bis 60 Minuten calciniert.

Vorzugsweise verwendet man in der Verfahrensstufe a) als Lösungsmittel Ethanol.

Das primär im Verfahrensschritt a) durch die Oxidation von Zinn-II-chlorid mit Wasserstoffperoxid hergestellte Zinnsäuresol, welches einen ausgeprägten Tyndalleffekt zeigt, wird durch die Chloridionen stabilisiert. Die organischen Lösungsmittel werden dabei insbesondere eingesetzt, um das Kristallwachstum der durch die Oxidation von Zinn-II-chlorid mit Wasserstoffperoxid erhaltenen kolloidalen Präzipitate zu verhindern. Die Primärpartikelgröße innerhalb des auf diese Weise hergestellten Sols kann mit Hilfe von Transmissionselektronenmikroskopie bestimmt werden, sie beträgt ca. 5 nm. Die Zinnsäuresole sind hydrolysestabil. Auch bei längerem Stehen bilden sich keine Niederschläge.

Fällt man aus diesen Lösungen in der Verfahrensstufe b) das Zinn-IV-oxid und/oder das Zinn-IV-oxidhydrat in Gegenwart eines Fluor enthaltenden Dotierungsmittels in ein- oder zweistufiger Verfahrensweise aus, enthalten die zu entsorgenden Abwässer nur Alkali- oder Ammoniumchloride, wobei zusätzliche Vorteile aus der günstigen Relation von 1 Atom Zinn zu 2 Atomen Chlor entstehen.

Als Dotierungsmittel werden vorzugsweise Flußsäure, Zinnfluoride, Ammonium- oder Alkalifluoride oder Hexafluorkieselsäure verwendet. Die Menge an Dotierungsmittel wird durch das angestrebte molare Verhältnis von Zinn : Fluor von 1 : 0,2 bis 1 : 0,6 bestimmt.

Das bei der Fällungsreaktion entstehende Zinn-IV-oxid bzw. Zinn-IV-oxidhydrat wird gewaschen. Überraschenderweise wird gefunden, daß sowohl die Teilchenmorphologie als auch -größe in hervorragender Weise durch eine anschließende Gefriertrocknung beeinflußbar sind. Unterschiedliche Parameter während der Gefriertrocknung bedingen deutliche Unterschiede in den entstehenden Teilchen.

Die anschließende Calcinierung des so getrockneten Zinn-IV-oxids erfolgt innerhalb eines Temperaturbereichs von 300 bis 600°C, bevorzugt zwischen 400 und 500°C. Zur Erzielung eines minimalen Pulverwiderstandes von etwa 10 Ω.m wird eine Zeitdauer von 15 bis 30 Minuten benötigt. Die Teilchengröße des auf diese Weise hergestellten mit Fluor dotierten Zinn-IV-oxids liegt unterhalb von 0,2 µm.

Die nach dem erfindungsgemäßen Verfahren hergestellten feinstteiligen, elektrisch leitfähigen Zinn-IV-Pulver eignen sich in hervorragender Weise als Pigment, Toner oder als Füllstoff zur Einarbeitung in Kunststoffe, Farben, Lacke, Papier oder Textilfasern.

Das erfindungsgemäße Verfahren wird anhand der folgenden Beispiele noch näher erläutert.

### Herstellung eines wäßrigen Zinnsäuresols

In eine Lösung von 3808 g Zinn-II-chlorid in 1200 ml Wasser werden unter ausreichender Kühlung und unter kräftigem Rühren 2276 g einer wäßrigen Wasserstoffperoxidlösung (30 Gew.-%) im Verlauf von 3 Stunden eingetropft. Die Reaktionstemperatur sollte dabei nicht mehr als 25°C betragen. Das auf diese Weise hergestellte Zinnsäuresol bedarf keiner weiteren Reinigung und ist lagerstabil. Bei der Verwendung von Alkoholen oder Ketonen statt Wasser wird statt von einer Zinn-II-chlorid-Lösung von einer Zinn-II-chlorid-Aufschlämmung ausgegangen.

### Beispiel 1

3 l des wäßrigen Zinnsäuresols, mit einem Zinngehalt von 400 g/l und einem Chloridgehalt von 230 g/l, werden mit 173 g 40 %iger Flußsäure versetzt. Unter Rühren neutralisiert man anschließend mit 20 %iger wäßriger Natriumhydroxidlösung. Die entstandene Suspension wird filtriert und anschließend im feuchten Zustand einer Gefriertrocknung unterzogen.

Das auf diese Weise erhaltene Produkt wird bei 500°C 35 Minuten calciniert. Das calcinierte Pulver ist sehr hell und besitzt einen spezifischen Widerstand von 7 Ω.m.

### Beispiel 2

Von einem ethanolischen Zinnsäuresol, mit einem Zinngehalt von 330 g/l und einem Zinn-Chlor-Verhältnis von 1 : 2, werden 2 l mit 31 g NH₄F versetzt und unter Rühren mit 20 %iger Ammoniaklösung neutralisiert. Nach der Filtration der so erhaltenen Suspension erhält man einen feuchten Filterkuchen, der nach der Gefriertrocknung ein sehr feines, weißes Pulver ergibt.

Durch eine anschließende 16minütige Calcinierung bei 500°C erhält man ein hellgraues Zinnoxid mit einem spezifischen Widerstand von 4 Ω.m.

### Beispiel 3

In 8 l wäßrigem Zinnsäuresol, mit einem Zinngehalt von 100 g/l, werden 150 g Zinn-II-fluorid gelöst und anschließend bis zu einem pH-Wert von 7 mit 10 %iger Natronlauge versetzt.

Die anschließend vorliegende Suspension wird filtriert und anschließend gefriergetrocknet. Durch eine 25minütige Calcinierung bei 500°C erhält man ein weißgraues, sehr feines Pulver mit einem spezifischen Widerstand von 9 Ω.m.

### Beispiel 4

Zur Bestimmung der optimalen Calcinierdauer wird ein Zinnsäuresol mit einem Gehalt von 1 Mol Zinn je Liter Lösung mit einer 0,1molaren Zinn-II-fluorid-Lösung versetzt, daß ein Zinn-Fluor-Verhältnis von 1 : 0,3 vorliegt. Das mit 10 %iger Natronlauge gefällte Produkt wird nach der Filtration gefriergetrocknet und anschließend bei 500°C bei unterschiedlichen Temperaturen calciniert. Die Abhängigkeit des spezifischen Widerstandes des calcinierten fluordotierten Zinn-IV-oxids von der Calcinierungsdauer ergibt sich aus der folgenden Tabelle:

| Spezifischer Widerstand [ Ω.m ] | Calcinierungsdauer [ min ] |
|---|---|
| 2 | 136 |
| 4 | 115 |
| 6 | 41 |
| 8 | 13 |
| 10 | 13 |
| 12 | 13 |
| 14 | 4 |
| 16 | 10 |
| 18 | 6 |
| 20 | 7 |
| 25 | 8 |

### Beispiel 5

In 3 l isopropanolischem Zinnsäuresol, mit einem Zinngehalt von 220 g/l, werden 124 g Zinn-II-fluorid gelöst. Anschließend wird mit 10 %iger Natronlauge bis zu einem pH-Wert von 7 versetzt. Die dabei erhaltene Suspension wird filtriert und gefriergetrocknet. Nach einer anschließenden Calcinierung bei 480°C über eine Dauer von 23 Minuten erhält man ein sehr feines, fast weißes Pulver. Der spezifische Pulverwiderstand beträgt 10 Ω.m.

### Beispiel 6

2 l eines Zinnsäuresols (mit Aceton als Lösungsmittel), mit einem Zinngehalt von 230 g/l, werden mit 70 g 40 %iger Flußsäure versetzt. Anschließend wird mit 20 %iger wäßriger Natronlauge bis zum pH-Wert von 7 neutralisiert. Die erhaltene Suspension wird filtriert und im noch feuchten Zustand gefriergetrocknet. Das so erhaltene Produkt wird bei 520°C 21 Minuten lang calciniert. Das calcinierte Pulver ist nahezu weiß und besitzt einen spezifischen Pulverwiderstand von 7 Ω.m.

## Patentansprüche

1. Verfahren zur Herstellung von feinstteiligem, elektrisch leitfähigem Zinn-IV-oxid durch Ausfällen von Zinn-IV-Verbindungen aus ihren wäßrigen Lösungen in Gegenwart von Fluor enthaltenden Dotierungsmitteln und Calcinieren der fluordotierten ausgefällten Zinn-IV-Verbindungen, dadurch gekennzeichnet, daß man
a) Zinn-II-chlorid in Wasser und/oder organischen aliphatischen Alkoholen oder Ketonen mit jeweils höchstens 6 Kohlenstoffatomen im Molekül löst oder verteilt und durch Einwirkung von Wasserstoffperoxid in ein Zinn-IV-säuresol überführt,
b) dem Zinn-IV-säuresol eine Fluor enthaltende Verbindung in solchen Mengen, daß das molare Verhältnis von Zinn : Fluor 1 : 0,2 bis 1 : 0,6 beträgt, und wäßrige Alkali- oder Ammoniumhydroxid- oder -carbonatlösung in zur Ausfällung des Zinn-IV-oxids bzw. des Zinn-IV-oxidhydrats ausreichender Menge nacheinander oder gemeinsam zusetzt,
c) das ausgefallene fluordotierte Zinn-IV-oxid bzw. -oxidhydrat gefriertrocknet und
d) das getrocknete Produkt innerhalb eines Temperaturbereiches von 300 bis 600°C während eines Zeitraumes von 8 bis 60 Minuten calciniert.

2. Verfahren nach Anspruch 1, dadurch gekennzeichnet, daß man in der Verfahrensstufe a) als Lösungsmittel Ethanol verwendet.

3. Verfahren nach Anspruch 1 oder 2, dadurch gekennzeichnet, daß man im Verfahrensschritt b) als Fluor enthaltendes Dotierungsmittel Flußsäure, Zinnfluoride, Ammonium- oder Alkalifluoride oder Hexafluorkieselsäure verwendet.

4. Verfahren nach einem oder mehreren der vorhergehenden Ansprüche, dadurch gekennzeichnet, daß man die Calcinierung im Verfahrensschritt d) innerhalb eines Temperaturbereiches von 400 bis 500°C durchführt.

5. Verwendung des nach einem oder mehreren der vorhergehenden Ansprüche erhaltenen fluordotierten Zinn-IV-oxids als Pigment, Toner oder als Füllstoff zur Einarbeitung in Kunststoffe, Farben, Lacke, Papier oder Textilfasern.

## Claims

1. Process for preparing very finely divided, electrically conductive tin(IV) oxide by precipitation of tin(IV) compounds from their aqueous solutions in the presence of fluorine-containing dopants and calcination of the fluorine-doped precipitated tin(IV) compounds, characterized in that
a) tin(II) chloride is dissolved or distributed in water and/or organic aliphatic alcohols or ketones each having at most 6 carbon atoms in the molecule and is converted into a stannic acid sol by action of hydrogen peroxide,
b) to the stannic acid sol there are added, successively or together, a fluorine-containing compound in such amounts that the molar ratio of tin: fluorine is from 1 : 0.2 to 1 : 0.6 and aqueous alkali metal or ammonium hydroxide or carbonate solution in an amount sufficient to precipitate the tin(IV) oxide or the hydrated tin(IV) oxide,
c) the precipitated fluorine-doped tin(IV) oxide or hydrated oxide is freeze dried and
d) the dried product is calcined within a temperature range from 300 to 600°C for a period of from 8 to 60 minutes.

2. Process according to Claim 1, characterized in that the solvent used in process stage a) is ethanol.

3. Process according to Claim 1 or 2, characterized in that the fluorine-containing dopant used in process step b) is hydrofluoric acid, tin fluorides, ammonium or alkali metal fluorides or hexafluorosilicic acid.

4. Process according to one or more of the preceding claims, characterized in that the calcination in process step d) is carried out within a temperature range from 400 to 500°C.

5. Use of the fluorine-doped tin(IV) oxide obtained according to one or more of the preceding claims as pigment, toner or as filler for incorporation into plastics, inks, surface coatings, paper or textile fibres.

## Revendications

1. Procédé de préparation d'oxyde stannique électroconducteur finement divisé, par précipitation de composés stanniques en solution aqueuse, en présence d'agents dopants contenant du fluor, et calcination des composés stanniques précipités et dopés au fluor, caractérisé en ce que :
a) on dissout ou on disperse du chlorure stanneux dans de l'eau et/ou dans des alcools organiques aliphatiques ou des cétones ayant chacun au plus 6 atomes de carbone dans la molécule et on le transforme en un sol d'acide stannique grâce à l'action du peroxyde d'hydrogène,
b) on ajoute un composé contenant du fluor au sol d'acide stannique, en des quantités telles que le rapport molaire de l'étain au fluor soit de 1 : 0,2 à 1 : 0,6, et on ajoute, successivement ou conjointement, une solution aqueuse d'hydroxyde ou de carbonate alcalin ou d ammonium en une quantité suffisante pour provoquer la précipitation de l'oxyde stannique ou de l'hydrate d'oxyde stannique,
c) on lyophilise l'oxyde ou l'hydrate d'oxyde stannique précipité dopé au fluor et
d) on calcine le produit séché, dans une plage de température de 300 à 600°C, pendant un laps de temps de 8 à 60 minutes.

2. Procédé selon la revendication 1, caractérisé en ce qu'on utilise de l'éthanol comme solvant lors de l'étape de procédé a).

3. Procédé selon la revendication 1 ou 2, caractérisé en ce qu'on utilise de l'acide fluorhydrique, des fluorures d'étain, des fluorures alcalins ou d'ammonium ou de l'acide hexafluorosilicique comme agent dopant contenant du fluor lors de l'étape de procédé b).

4. Procédé selon une ou plusieurs des revendications précédentes, caractérisé en ce qu'on effectue la calcination, lors de l'étape de procédé d), à une température comprise entre 400 et 500°C.

5. Utilisation de l'oxyde stannique dopé au fluor obtenu selon une ou plusieurs des revendications précédentes, en tant que pigment, toner ou charge à incorporer dans des matières plastiques, des peintures, des laques, du papier ou des fibres textiles.
